# EUROPEAN PATENT APPLICATION

(11) **EP 4 742 379 A1**
(43) Date of publication of application: **13.05.2026**
(21) Application number: 25209655.7
(22) Date of filing: 20.10.2025
(51) Int. Cl.: H01M 50/103, H01M 50/548, H01M 50/474, H01M 50/477, H01M 50/491, H01M 50/494

(54) **SECONDARY BATTERY AND METHOD FOR MANUFACTURING SAME**

(30) Priority: 11.11.2024 KR 20240159103
(71) Applicant: SAMSUNG SDI CO., LTD., Yongin-si, Gyeonggi-do 17084 (KR)
(72) Inventor: Hwang, Yusik, 17084 Gyeonggi-do, Yongin-si (KR)
(74) Representative: Meissner Bolte Partnerschaft mbB

(57) **Abstract**

A secondary battery, including an electrode assembly (140) including a positive electrode, a negative electrode, and a separation film between the positive electrode and the negative electrode, a holder (340, 640) that surrounds an outer surface of the electrode assembly (140), and a case accommodating the electrode assembly (140) and the holder (340, 640), wherein the holder (340, 640) includes a plurality of grooves (346, 348, 646, 648) through which the electrode assembly (140) is exposed.

## Description

### BACKGROUND

### 1. Field

The present invention relates to a secondary battery and a method for manufacturing the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode assembly of a secondary battery is connected to an electrode terminal through an electrode tab. Due to the impact applied to the secondary battery, movements of the electrode assembly may cause the electrode tab to break. Accordingly, the stability and reliability of the secondary battery may be deteriorated.

The above information disclosed in this Background section is for enhancement of understanding of the background of the present invention, and therefore, it may contain information that does not constitute related (or prior) art.

### SUMMARY

The present invention is directed to a secondary battery, including an electrode assembly including a positive electrode, a negative electrode, and a separation film between the positive electrode and the negative electrode, a holder that surrounds an outer surface of the electrode assembly, and a case accommodating the electrode assembly and the holder, wherein the holder includes a plurality of grooves through which the electrode assembly is exposed.

The case may include a case body including a first opening and a second opening facing the first opening, a first side plate coupled to the first opening, a second side plate coupled to the second opening, a first terminal connected to the electrode assembly, and coupled to the first side plate, extending away from the case, and a second terminal connected to the electrode assembly, and coupled to the second side plate, extending away from the case.

In some embodiments the secondary battery may include a first electrode tab electrically connected to the positive electrode, and a second electrode tab electrically connected to the negative electrode, wherein the first electrode tab and the second electrode tab may face each other, the first electrode tab may be connected to the first terminal, and the second electrode tab may be connected to the second terminal.

The holder may include a rigid film.

The electrode assembly may include a pair of first surfaces along a first direction, a pair of second surfaces along a second direction perpendicular to the first direction, and a pair of third surfaces along a third direction perpendicular to each of the first direction and the second direction, wherein an area of the pair of second surfaces may be greater than an area of the pair of third surfaces, and the holder may surround at least a part of the pair of second surfaces, and at least a part of the pair of third surfaces.

In some embodiments the secondary battery may include a first electrode tab and a second electrode tab each electrically connected to a different one of the pair of first surfaces.

The holder may include a first frame that surrounds at least a part of the pair of second surfaces and a second frame that surrounds at least a part of the pair of third surfaces.

A width the pair of second surfaces may be smaller than a length of the pair of second surfaces, the first frame may include a plurality of first grooves, and a width of the plurality of first grooves may be determined based on the width of the pair of second surfaces.

The width of the plurality of first grooves may be within 17.5% of the width of the pair of second surfaces.

A width the pair of third surfaces may be smaller than a length of the pair of third surfaces, the second frame may include a plurality of second grooves, and a width of the plurality of second grooves may be determined based on the width of the pair of third surfaces.

The width of the plurality of second grooves may be within 35% of the width the pair of third surfaces.

The number of the plurality of second grooves may be smaller than the number of the plurality of first grooves.

A sum of areas of the plurality of grooves may be 60% to 80% of a sum of areas of the pair of second surfaces and the pair of third surfaces.

A thickness of the holder may be 4.5 mm to 5.0 mm.

The present invention is directed to a manufacturing method of a secondary battery, the method including preparing an electrode assembly including a positive electrode, a negative electrode, and a separation film between the positive electrode and the negative electrode, arranging a holder to surround an outer surface of the electrode assembly, and accommodating the electrode assembly and the holder inside a case, wherein the holder includes a plurality of grooves through which the electrode assembly is exposed.

The arranging of the holder may include arranging an adhesive member on one surface of the holder, forming a plurality of grooves by cutting at least a part of the holder, and arranging the holder to surround an outer surface of the electrode assembly.

The holder may include a rigid film.

The electrode assembly may include a pair of first surfaces disposed along a first direction, a pair of second surfaces disposed along a second direction perpendicular to the first direction, and a pair of third surfaces disposed along a third direction perpendicular to each of the first direction and the second direction, wherein an area of the pair of second surfaces may be greater than an area of the pair of third surfaces, and the holder may surround at least a part of the pair of second surfaces and at least a part of the pair of third surfaces.

The holder may include a first frame that surrounds at least a part of the pair of second surfaces, and a second frame that surrounds at least a part of the pair of third surfaces, wherein a width of the pair of second surfaces is smaller than a length of the pair of second surfaces, the first frame includes a plurality of first grooves, and a width of each of the plurality of first grooves is determined based on a width of the pair of second surfaces.

A width of the pair of third surfaces may be smaller than a length of the pair of third surfaces, the second frame may include a plurality of second grooves, and a width of each of the plurality of second grooves may be determined based on the width of the pair of third surfaces.

### BRIEF DESCRIPTION OF DRAWINGS

Features will become apparent to those of skill in the art by describing in detail exemplary embodiments with reference to the attached drawings in which:
FIG. 1 is a view illustrating an example of a secondary battery according to embodiments of the present invention.
FIG. 2 is a view illustrating an example of cross section of the secondary battery taken along line A-A'.
FIG. 3 is a perspective view illustrating an example of a holder according to embodiments of the present invention.
FIG. 4 is a side view illustrating an example of a holder according to embodiments.
FIG. 5 is a plan view illustrating an example of a holder according to embodiments.
FIG. 6 is a perspective view illustrating an example of a holder according to embodiments of the present invention.
FIG. 7 is a side view illustrating an example of a holder according to embodiments.
FIG. 8 is a plan view illustrating an example of a holder according to embodiments.
FIG. 9 is a flowchart illustrating an example of a secondary battery manufacturing method according to embodiments.
FIG. 10 is a view illustrating an example of a manufacturing method of a holder according to embodiments of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor may be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that may replace or modify the embodiments described herein at the time of filing this application.

It will be understood that when a layer or element is referred to as being "between" two layers, it may be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

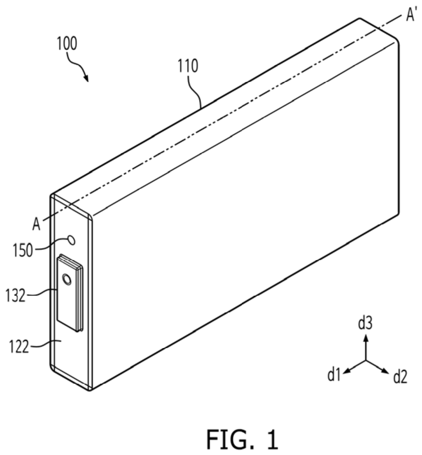

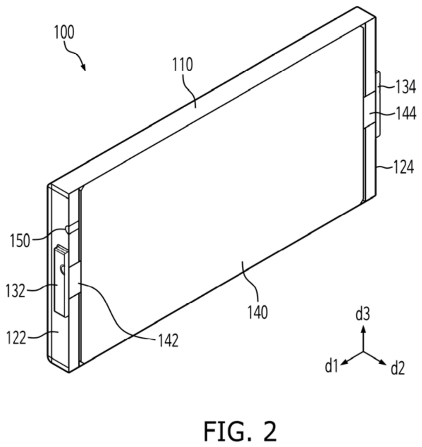

FIG. 1 is a view illustrating an example of a secondary battery 100 according to embodiments of the present invention. FIG. 2 is a view illustrating an example of cross section of the secondary battery 100 taken along line A-A'.

Referring to FIG. 1 and FIG. 2the secondary battery 100 includes an electrode assembly 140 and a case for accommodating the electrode assembly therein. The case may include a case body 110 including a first opening and a second opening facing the first opening, a first side plate 122 coupled to the first opening, a second side plate 124 coupled to the second opening, a first terminal 132 coupled to the first side plate 122 to outwardly protrude and a second terminal 134 coupled to the second side plate 124 to outwardly protrude. For example, the first terminal 132 and the second terminal 134 may extend away from the case.

The electrode assembly 140 includes a positive electrode, a negative electrode, and a separation film between the positive electrode and the negative electrode. Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present invention is not limited thereto, and the electrode assembly 140 may have a structure in which a positive electrode and a negative electrode, each made of a plurality of sheets, are alternately stacked with a separator interposed therebetween.

The case may form the overall outer appearance of the secondary battery 100 and may be made of a conductive metal, such as aluminum, aluminum alloy, or nickelplated steel. In addition, the case may provide a space in which the electrode assembly 140 is accommodated.

In addition, the positive and negative electrode terminals protruding outwardly from the side plates 122 and 124 may have a rivet structure and may be riveted or welded to the side plates 122 and 124.

In addition, the side plates 122 and 124 may be made of a thin plate and may be coupled to the opening in the case body 110, and an electrolyte injection port 150 into which a sealing stopper may be installed may be located (e.g., formed) at least a portion of the side plates 122 and 124, and a vent portion having a notch may be installed.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobaltfree nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5,0<α<2); LiₐNi_{b}Co_{c}L¹_{d}GₑO₂ (0.90≤a≤1.8, 0≤b≤0.9, 0≤c≤0.5,0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G₈O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8) .

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

In an embodiment, the secondary battery 100 may further include a first electrode tab 142 electrically connected to the positive electrode of the electrode assembly 140, and a second electrode tab 144 electrically connected to the negative electrode of the electrode assembly 140. The first electrode tab and the second electrode tab may face each other in a first direction d1. The first electrode tab 142 may be electrically connected to the first terminal 132, and the second electrode tab 144 may be electrically connected to the second terminal 134. The first terminal 132 may be a positive electrode terminal, and the second terminal 134 may be a negative electrode terminal.

In an embodiment, a width (or a length in a third direction d3) of the secondary battery 100 may be smaller than a length (or a width in the first direction d1) of the secondary battery 100. The first terminal 132 and the second terminal 134 of the secondary battery 100 may be formed along the first direction d1. The electrode assembly 140 may be connected to the first terminal 132 and the second terminal 134, and the first electrode tab 142 and the second electrode tab 144, which may help reduce the flow, e.g., movement, of the electrode assembly 140 due to impact in the first direction d1.

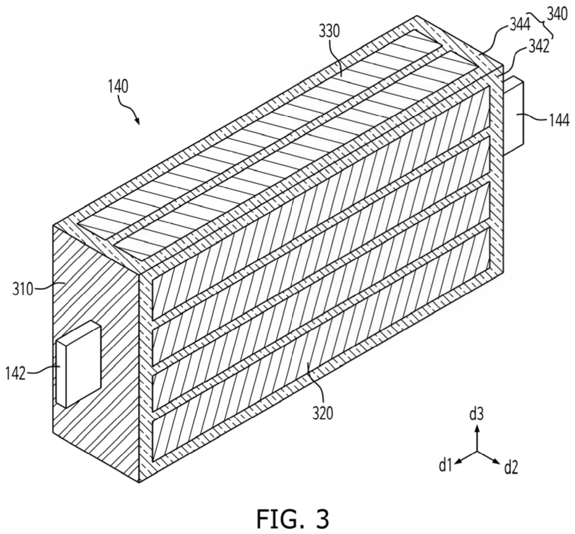

The secondary battery 100 further includes a holder that surrounds an outer surface of the electrode assembly 140. The holder includes a plurality of grooves that expose the electrode assembly 140. For example, the electrode assembly 140 may not be covered by the holder at portions corresponding to the location of the plurality of grooves. The holder may support the outer surface of the electrode assembly 140 to suppress the movement of the electrode assembly 140 due to an impact in a second direction d2 or the third direction d3. Embodiments of the holder will be described in detail with reference to FIG. 3 to FIG. 8.

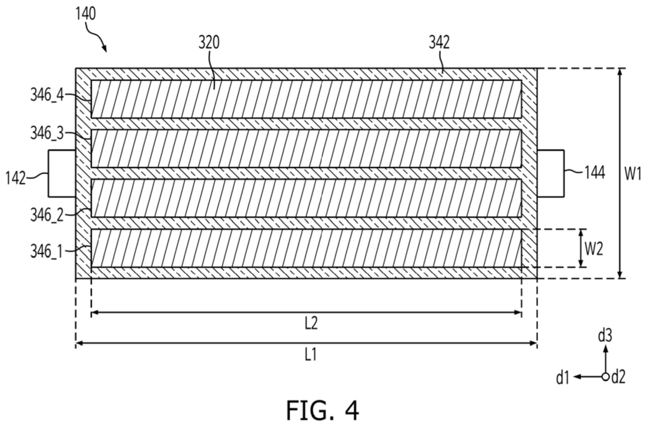

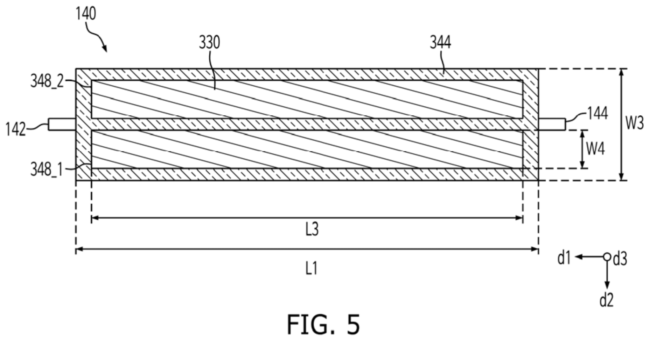

FIG. 3 is a perspective view illustrating an example of a holder 340 according to embodiments of the present invention, FIG. 4 is a side view illustrating an example of a holder 340 according to embodiments, and FIG. 5 is a plan view illustrating an example of a holder 340 according to embodiments.

Referring to FIG. 3 to FIG. 5, according to embodiments, the electrode assembly 140 may include a pair of first surfaces 310 along the first direction d1, a pair of second surfaces 320 along the second direction d2 perpendicular to the first direction d1, and a pair of third surfaces 330 along the third direction d3 perpendicular to the first direction d1 and the second direction d2. The first electrode tab 142 and the second electrode tab 144 may be electrically connected to the pair of first surfaces 310, respectively. For example, the first electrode tab 142 and the second electrode tab 144 may each be electrically connected to a different one of the pair of first surfaces 310. The area of the pair of second surfaces 320 may be greater than the area of the pair of third surfaces 330. The length of the pair of second surfaces 320 may be the same as the length of the pair of third surfaces 330, but the width of the pair of second surfaces 320 may be greater than the width of the pair of third surfaces 330.

The holder 340 may surround the outer surface of the electrode assembly 140. The holder 340 may surround at least a part of the pair of second surfaces 320, and at least a part of the pair of third surfaces 330. The holder 340 may include a first frame 342 that surrounds at least a part of the pair of second surfaces 320 and a second frame 344 that surrounds at least a part of the pair of third surfaces 330. In an implementation, the holder 340 may include a plurality of grooves that expose the electrode assembly 140. For example, the holder 340 may include a plurality of grooves that extend through an entire thickness of a surface of the case and through which the electrode assembly 140 may be exposed.

In an implementation, referring to FIG. 4, a width W1 of the pair of second surfaces 320 may be smaller than a length L1 of the pair of second surfaces 320. In this case, the first frame 342 may include a plurality of first grooves 346_1 to 346_4. A width W2 of each of the plurality of first grooves 346_1 to 346_4 may be determined based on the width W1 of the pair of second surfaces 320. In an implementation, the width W2 of each of the plurality of first grooves 346_1 to 346_4 may be within 17.5% of the width W1 of the pair of second surfaces 320.

In an implementation, referring to FIG. 5, a width W3 of the pair of third surfaces 330 may be smaller than a length L1 of the pair of third surfaces 330. In an implementation, the second frame 344 may include a plurality of second grooves 348_1 and 348_2. A width W4 of each of the plurality of second grooves 348_1 and 348_2 may be determined based on the width W3 of the pair of third surfaces 330. In an implementation, the width W4 of each of the plurality of second grooves 348_1 and 348_2 may be within 35% of the width W3 of the pair of third surfaces 330.

In an implementation, each of the plurality of first grooves 346_1 to 346_4 and each of the plurality of second grooves 348_1 and 348_2 of the holder 340 may expose the pair of second surfaces 320 and the pair of third surfaces 330 of the electrode assembly 140. For example, the holder 340 may not cover the electrode assembly 140 at the portions corresponding to the plurality of first grooves 346_1 to 346_4 or the plurality of second grooves 348_1 and 348_2. Therefore, an electrolyte may be impregnated into the inside of the electrode assembly 140. The sum of the areas of the plurality of first grooves 346_1 to 346_4 and the plurality of second grooves 348_1 and 348_2 may be 60% to 80% of the sum of the areas of the pair of second surfaces 320 and the pair of third surfaces 330.

In an implementation, the number of plurality of second grooves 348_1 and 348_2 may be smaller than the number of plurality of first grooves 346_1 to 346_4. In an implementation, as illustrated in FIGS. 3 to 5, the number of plurality of first grooves may be four (4) and the number of plurality of second grooves may be (2).

In an implementation, the holder 340 may be made of or include a material for fixing and supporting the electrode assembly 140 and the energy density of the secondary battery. In an implementation, the holder 340 may be made of or include a rigid film formed of a material having an excellent heat resistance and chemical resistance, e.g., Liquid Crystal Polymer (LCP). The thickness of the holder 340 may be, e.g., 4.5 mm to 5.0 mm.

With the holder supporting the electrode assembly, the movement of the electrode assembly due to the impact in the second and third directions, different from the first direction in which an electrode tab may be formed, may be reduced. Accordingly, the stability of the secondary battery may be improved because the breakage of the electrode tab may be suppressed. In an implementation, an electrolyte may be easily impregnated into the electrode assembly by exposing the electrode assembly through the plurality of grooves of the holder.

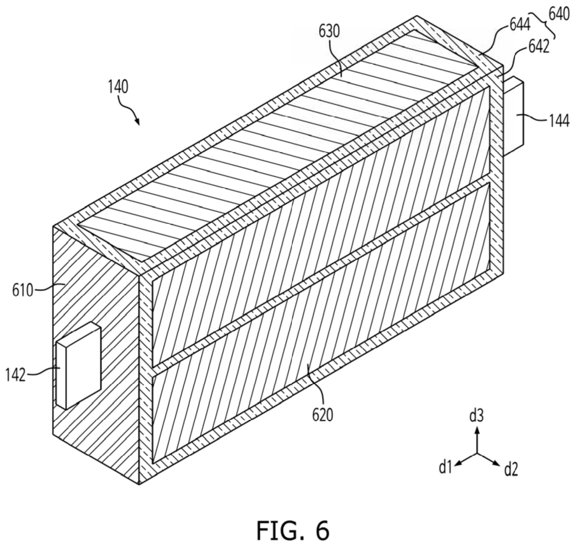

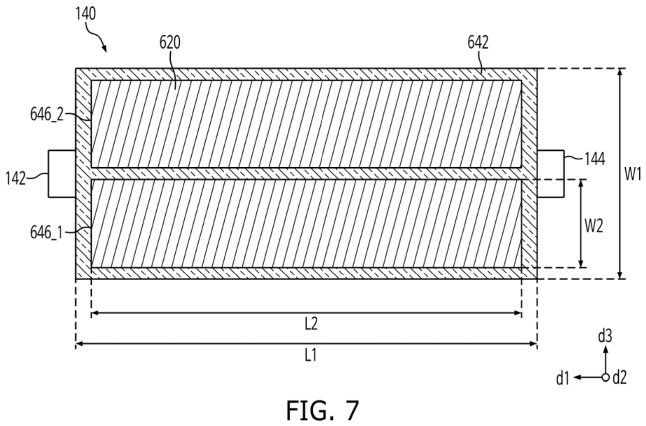

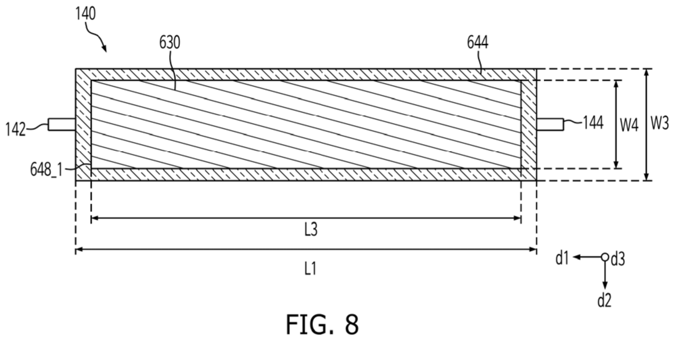

FIG. 6 is a perspective view illustrating an implementation of a holder 640 according to embodiments of the present invention, FIG. 7 is a side view illustrating an example of a holder 640 according to embodiments, and FIG. 8 is a plan view illustrating an example of a holder 640 according to embodiments.

Referring to FIGS. 6 to 8, according to embodiments, the electrode assembly 140 may include a pair of first surfaces 610 along the first direction d1, a pair of second surfaces 620 along the second direction d2 perpendicular to the first direction d1, and a pair of third surfaces 630 along the third direction d3 perpendicular to the first direction d1 and the second direction d2. A first electrode tab 142 and a second electrode tab 144 may be electrically connected to the pair of first surfaces 610, respectively. For example, the first electrode tab 142 and the second electrode tab 144 may each be electrically connected to a different one of the pair of first surfaces 610. In an implementation, an area of the pair of second surfaces 620 may be greater than an area of the pair of third surfaces 630. The length of the pair of second surfaces 620 and the length of the pair of third surfaces 630 may be the same, but the width of the pair of second surfaces 620 may be greater than the width of the pair of third surfaces 630.

The holder 640 may surround an outer surface of the electrode assembly 140. In an implementation, the holder 640 may surround at least a part of the pair of second surfaces 620 and at least a part of the pair of third surfaces 630. The holder 640 may include a first frame 642 that surrounds at least a part of the pair of second surfaces 620 and a second frame 644 that surrounds at least a part of the pair of third surfaces 630. In addition, the holder 640 may include a plurality of grooves that expose the electrode assembly 140. For example, the holder 640 may include a plurality of grooves through which the electrode assembly 140 may be exposed.

In an embodiment, referring to FIG. 7, a width W1 of the pair of second surfaces 620 may be smaller than a length L1 of the pair of second surfaces 620. In this case, the first frame 642 may include a plurality of first grooves 646_1 and 646_2. A width W2 of each of the plurality of first grooves 646_1 and 646_2 may be determined based on the width W1 of the pair of second surfaces 620. In an implementation, the width W2 of each of the plurality of first grooves 646_1 and 646_2 may be within 35% of the width W1 of the pair of second surfaces 620.

In an embodiment, referring to FIG. 8, a width W3 of the pair of third surfaces 630 may be smaller than a length L1 of the pair of third surfaces 630. In this case, the second frame 644 may include a second groove 648_1. A width W4 of the second groove 648_1 may be determined based on the width W3 of the pair of third surfaces 630. In an implementation, the width W4 of the second groove 648_1 may be within 70% of the width W3 of the pair of third surfaces 630.

In an implementation, each of the plurality of first grooves 646_1 and 646_2 and the second groove 648_1 of the holder 640 may expose the pair of second surfaces 620 and the pair of third surfaces 630 of the electrode assembly 140. For example, the holder 640 may not cover the electrode assembly 140 at the portions corresponding to the plurality of first grooves 646_1 and 646_2 or the second groove 648_1. The electrolyte may be impregnated into the inside of the electrode assembly 140. The sum of the areas of the plurality of first grooves 646_1 and 646_2 and the second groove 648_1 may be 60% to 80% of the sum of the areas of the pair of second surfaces 620 and the pair of third surfaces 630.

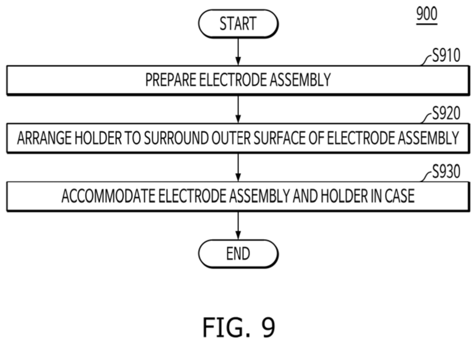

FIG. 9 is a flowchart illustrating an example of a secondary battery manufacturing method 900 according to embodiments.

Referring to FIG. 9, according to embodiments, a secondary battery manufacturing method 900 may be initiated by preparing an electrode assembly including a positive electrode, a negative electrode, and a separation film between the positive electrode and the negative electrode in step S910. The holder may be placed to surround the outer surface of the electrode assembly in step S920. The holder may include a plurality of grooves that expose the electrode assembly. The holder may be or include a rigid film. The electrode assembly and the holder may be accommodated in the case in step S930.

In an implementation, an adhesive member may be placed on one surface of the holder. A plurality of grooves may be formed by cutting at least a part of the holder. The holder may be placed to surround the outer surface of the electrode assembly. In an embodiment, the electrode assembly may include a pair of first surfaces placed along a first direction, a pair of second surfaces placed along a second direction perpendicular to the first direction, and a pair of third surfaces placed along a third direction perpendicular to the first and second directions. The area of the pair of second surfaces may be greater than the area of the pair of third surfaces. In an implementation, the holder may surround at least a part of the pair of second surfaces and at least a part of the pair of third surfaces.

In an implementation, the holder may include a first frame that surrounds at least a part of the pair of second surfaces and a second frame that surrounds at least a part of the pair of third surfaces. In an implementation, the width of the pair of second surfaces may be smaller than the length of the pair of second surfaces. The first frame may include a plurality of first grooves. The width of each of the plurality of first grooves may be determined based on the width of the pair of second surfaces.

In an implementation, the width of the pair of third surfaces may be smaller than the length of the pair of third surfaces. The second frame may include a plurality of second grooves. The width of each of the plurality of second grooves may be determined based on the width of the pair of third surfaces.

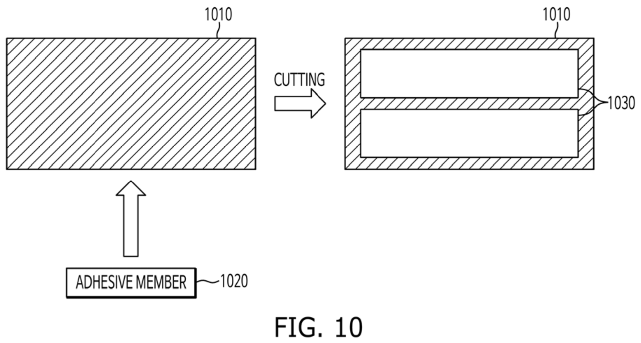

FIG. 10 is a view illustrating an example of a manufacturing method of a holder 1010 according to embodiments of the present invention.

In an embodiment, an adhesive member 1020 may be applied to one surface of the holder 1010. The holder 1010 may be, e.g., a rigid film. A plurality of grooves 1030 may be formed in the holder 1010 by cutting at least a part of the holder 1010. In FIG. 10, the frame of the holder 1010 for one surface is illustrated, but the frames for four (4) surfaces of the electrode assembly (e.g., a pair of second surfaces and a pair of third surfaces in FIG. 3) may be cut to form the holder 1010.

By way of summation and review, embodiments of the present invention may provide a secondary battery and a method for manufacturing the secondary battery.

According to embodiments of the present invention, the movement of an electrode assembly by the impact along the second direction and the third direction different from the first direction in which an electrode tab is formed may be reduced because a holder supports the electrode assembly. Accordingly, the stability of secondary batteries may be improved by suppressing the breakage of the electrode tab. In addition, an electrolyte may be easily impregnated into the electrode assembly by exposing the electrode assembly through a plurality of grooves of the holder.

These and other aspects and features of the present invention will be described in or will be apparent from the preceding description of embodiments of the present invention.

However, aspects and features of the present invention are not limited to those described above, and other aspects and features not mentioned will be clearly understood by a person skilled in the art from the detailed description, described above.

Although the present invention has been described above with respect to embodiments thereof, the present invention is not limited thereto. Various modifications and variations may be made thereto by those skilled in the art within the spirit of the present invention and the equivalent scope of the appended claims.

## Claims

1. A secondary battery (100), comprising:
an electrode assembly (140) including a positive electrode, a negative electrode, and a separation film between the positive electrode and the negative electrode;
a holder (340, 640) that surrounds an outer surface of the electrode assembly (140); and
a case accommodating the electrode assembly (140) and the holder (340, 640),
wherein the holder (340, 640) includes a plurality of grooves (346, 348, 646, 648) through which the electrode assembly (140) is exposed.

2. The secondary battery (100) as claimed in claim 1, wherein the case includes:
a case body (110) including a first opening and a second opening facing the first opening,
a first side plate (122) coupled to the first opening,
a second side plate (124) coupled to the second opening,
a first terminal (132) connected to the electrode assembly (140), and coupled to the first side plate (122), extending away from the case, and
a second terminal (134) connected to the electrode assembly (140), and coupled to the second side plate (124), extending away from the case.

3. The secondary battery (100) as claimed in claim 1 or 2, further including:
a first electrode tab (142) electrically connected to the positive electrode, and
a second electrode tab (144) electrically connected to the negative electrode,
wherein:
the first electrode tab (142) and the second electrode (144) tab face each other,
the first electrode tab (142) is connected to the first terminal (132), and
the second electrode tab (144) is connected to the second terminal (134).

4. The secondary battery (100) as claimed in any of the preceding claims, wherein the holder (340, 640) includes a rigid film.

5. The secondary battery (100) as claimed in any of the preceding claims, wherein the electrode assembly (140) includes:
a pair of first surfaces (310, 610) along a first direction (D1),
a pair of second surfaces (320, 620) along a second direction (D2) perpendicular to the first direction (D1), and
a pair of third surfaces (330, 630) along a third direction (D3) perpendicular to each of the first direction (D1) and the second direction (D2),
wherein:
an area of the pair of second surfaces (320, 620) is greater than an area of the pair of third surfaces (330, 630), and
the holder (340, 640) surrounds at least a part of the pair of second surfaces (320, 620), and at least a part of the pair of third surfaces (330, 630).

6. The secondary battery (100) as claimed in claim 5, further including a first electrode tab (142) and a second electrode tab (144) each electrically connected to a different one of the pair of first surfaces (310, 610).

7. The secondary battery (100) as claimed in claim 5 or 6, wherein the holder (340, 640) includes:
a first frame (342, 642) that surrounds at least a part of the pair of second surfaces (320, 620), and
a second frame (344, 644) that surrounds at least a part of the pair of third surfaces (330, 630).

8. The secondary battery (100) as claimed in claim 7, wherein:
a width (W1) of the pair of second surfaces (320, 620) is smaller than a length (L1) of the pair of second surfaces (320, 620),
the first frame (342, 642) includes a plurality of first grooves (346, 646), and
a width (W2) of the plurality of first grooves (346, 646) is determined based on the width (W1) of the pair of second surfaces (320, 620).

9. The secondary battery (100) as claimed in claim 8, wherein the width (W2) of the plurality of first grooves (346, 646) is within 17.5% of the width (W1) of the pair of second surfaces (320, 620).

10. The secondary battery (100) as claimed in claim 8 or 9, wherein:
a width (W3) the pair of third surfaces (330, 630) is smaller than a length (L1) of the pair of third surfaces (330, 630),
the second frame (344, 644) includes a plurality of second grooves (348, 648), and
a width (W4) of the plurality of second grooves (348, 648) is determined based on the width (W3) of the pair of third surfaces (330, 630).

11. The secondary battery (100) as claimed in claim 10, wherein the width (W4) of the plurality of second grooves (348, 648) is within 35% of the width (W3) of the pair of third surfaces (330, 630).

12. The secondary battery (100) as claimed in claim 10 or 11, wherein a number of the plurality of second grooves (348, 648) is smaller than a number of the plurality of first grooves (346, 646).

13. The secondary battery (100) as claimed in any of the claims 5 to 12, wherein a sum of areas of the plurality of grooves (346, 348, 646, 648) is 60% to 80% of a sum of areas of the pair of second surfaces (320, 620) and the pair of third surfaces (330, 630).

14. The secondary battery (100) as claimed in any of the preceding claims, wherein a thickness of the holder (340, 640) is 4.5 mm to 5.0 mm.

15. A manufacturing method of a secondary battery (100), the method comprising:
preparing an electrode assembly (140) including a positive electrode, a negative electrode, and a separation film between the positive electrode and the negative electrode;
arranging a holder (340, 640) to surround an outer surface of the electrode assembly (140); and
accommodating the electrode assembly (140) and the holder (340, 640) inside a case,
wherein the holder (340, 640) includes a plurality of grooves (346, 348, 646, 648) through which the electrode assembly (140) is exposed.
